# EUROPEAN PATENT SPECIFICATION

(11) **EP 2 441 365 B1**
(45) Date of publication and mention of the grant of the patent: **01.05.2019**
(21) Application number: 10013559.9
(22) Date of filing: 12.10.2010
(51) Int. Cl.: A47K 5/12, F04B 43/00, F04B 43/12, G01F 11/12

(54) **Liquid feeding assembly**
Flüssigkeitszufuhranordnung
Ensemble de remplissage de liquide

(43) Date of publication of application: 18.04.2012
(73) Proprietor: CC Clinic Consult GmbH, 80803 München (DE)
(72) Inventor: Brachtendorf, Hans-Jürgen, 84032 Altdorf (DE); Huang, Chia Yung, 110 Taipei City, (TW)
(74) Representative: Graf von Stosch, Andreas

(56) References cited:
- EP-A1- 0 493 865
- WO-A1-90/12530
- US-A- 4 921 150
- US-A1- 2005 127 104

## Description

### FIELD OF THE INVENTION

The invention relates to a liquid feeding assembly suitable for a liquid dispensing system for placement in a health care setting, public conveniences, or other high footfall areas. Further, the invention relates to a liquid dispensing system encompassing the liquid feeding assembly and suitable for dispensing of liquids associated with hand-hygiene.

### BACKGROUND OF THE INVENTION

The use of systems for dispensing liquids for hand hygiene has become increasingly prevalent over the past few years partly due to an increased acknowledgement that hand hygiene remains the primary measure to reduce health care-associated infection and the spreading of anti-microbial resistance. It is also widely reported that health care-associated infections affect hundreds of millions of patients worldwide every year. As an unintended result of seeking care, these infections lead to more serious illness, prolonging hospital stays, and induce long-term disability. Not only do they inflict a massive additional financial burden on the health-care system but they also contribute to unnecessary patient deaths.

Similarly, in public conveniences or other high footfall areas (for example airports, shopping precincts and so on) the transmission of pathogens such as bacteria and viruses due to poor hand-hygiene has led - in part - to an increased transmission of other viruses such as the SARS virus, and the H1N1 influenza virus amongst others.

Destroying the pathogens which can be costly to health care organisations is a very simple task indeed and involves a person making use of one of soap, water or recently popularised dry handwash detergents. In order to encourage good hand-hygiene, and to allow access to users to clean their hands at any time, hand wash dispensers are now common place throughout health care settings, areas of high footfall areas and public conveniences. Typically, two types of hand cleaning dispensers are commonly found throughout modern society. The first is a dispenser commonly placed nearby to washbasins and dispenses liquid soap material. A second kind of dispenser (which is generally a modification on the former) is generally located remote from sources of water e.g. wash basins, and dispenses 'dry handwash' detergents. It is generally considered that dry handwash dispensers have encouraged good hand-hygiene practice and consequently reduced the incidence of pathogen transmittal amongst the general population. Moreover, such dispensers are considered to be more convenient for use by a transient population found in high footfall areas.

However, whilst significant placement of liquid dispensing devices such as for the dispensing of dry handwash detergents have been made over recent years, the design of such devices have attributed and encouraged growth of bacteria. For example, frequent use of currently known liquid dispensing devices can increase the risk of transferring bacteria between users such is the dependency of interfacing with the user using mechanical components. Consequently, the transfer of handling residue from one user to another is common place and the reliance on a team of cleaning staff to maintain such dispensers is considered prudent. Indeed, parts of known dispensers may inherently be inaccessible to maintenance staff therefore encouraging downtime for maintenance and out of service dispensers. Clearly, operation or use by hand is not considered very hygenic and is undesirable especially for use in a clinical setting.

Preferably, the dispensing of fluid from a dispenser must be in controlled doses. However, dry handwash detergents are manufactured with different compositions and viscosities, leading to under or overdosed quantities of detergent. The latter can be wasteful and leads to a very expensive hand to hygiene ratio.

In particular, the provision of dispensers for soap, detergents and so on has long been an area of research and development activities. For example European Patent 1,588,773 and published to Ophardt et al., discloses a dosing apparatus for dispensing liquid soap, or disinfectant. However, such a dispenser relies on manual operation to dispense a fluid, and as indicated previously such a design obviates the purpose of a hand-hygiene dispenser.

United States Patent 4,645,094 published to Acklin et al., discloses a fluid dispenser relies on a squeezing force provided by a pressure plate which is connected to a spring-driven lever to release a constant flow rate from the container. However, such reliance on a spring as an actuation force is subject to mechanical failure over time leading to a failed fluid dispenser. It is therefore apparent that such designs are expensive to operate and further costly to manufacture.

United States Patent 4,256,242 published to Christine, discloses a dispensing system for fluidic materials wherein a metered amount of product can be released or dispensed upon each actuation of the dispensing mechanism. Generally, such released or dispensed amount of fluid is based on manual operation which, depending on the viscosity of dispensing fluid, requires a differing manual force. Such in-consistent dispensing is not user friendly and can lead to a high MTBF (Mean Time Between Failure) rate. Consequently, such a design might obviate the purpose of a hand-hygiene dispenser.

European Patent 361, 260 published to Ophardt, discloses a piston pump for dosing flowable substances. Again, such a design relies on a spring loaded piston for allowing material to be dispensed. Such arrangement is generally disadvantageous in that they are prone to failure and difficult to maintain. Generally, such failures require replacement with a new unit.

United States patent application no. US 2005/0127104 A1 discloses a liquid rationing device that comprises a base and a cover. The base is provided with an actuating element with excel goes through the base. The axle is connected with a gear disk which is provided with more than one roller on one side thereof. The cover is coupled to one side of the base and has a reservoir provided with a transmission hose with positioning extrusion. A positioning groof is provided on the reservoir such that the positioning extrusion of the transmission hose can be held therein and the transmission hose can surround the circle of the rollers. The actuating element can drive the gear disk and make the rollers on the gear disk to rotate and subsequently push and squeeze the transmission hose, thereby making the displacement of the liquid in the transmission hose and obtaining the purposes of rationing,

European patent application EP 0493865 A1 discloses a cleanser dispenser with a motor-operated cleanser discharge unit which is provided with a plurality of press rollers which are mounted on a rotary support operated by the motor in such a manner that they are angularly spaced from one another and that their axes are parallel to and equally spaced from the axis of rotation of the rotary support. The press rollers depress a flexible cleansable discharge conduit against a curved guide wall to stop the flow of the cleanser. The press rollers minimize the friction produced on the flexible conduit. The flexible conduit is always compressed by at least one press roller regardless of the accuracy of the control of the motor operation, thereby alleviating the problem of cleanser leakage.

International patent publication no. WO 90/12530 discloses a soap dispenser apparatus which has a housing with a space formed in the housing for holding a soap container of a predetermined shape. The soap container has its own dispenser hose and noozle formed therein and the dispenser hose fits through a squeeze pump and becomes part of the pump pumping the soap from the container. An electric motor has a gear box for gearing the motor down located in the housing and positioned to actuate a squeeze member to squeeze the dispenser hose against the pressure plate made of a self-lubricating polymer. A sensor, such as an infrared sensor, senses a person's hand inline with the output of the soap container and dispenser noozle and is coupled through a circuit to the electric motor to actuate the squeeze pump to pump the soap onto a person's hand positioned to receive the soap.

United States patent 4,921,150 discloses an apparatus for automatically dispensing flowable material from a dispensable container. The apparatus includes an electronic control circuit that includes a photoelectric emitter, and a photo-transistor detector adapted to receive energy reflected from a target such as a user's hand. The control circuit includes first and second timing circuits and further a detector circuit, responsive to sensing of electromagnetic radiation reflected from the target to generate an actuation signal. The control circuit also includes a third timing circuit responsive to the accretion signal for activating a pump. This operation actuates the release of a predetermined amount of material from the disposable container.

In summary, the dispensers described above are disadvantageous in that they are expensive to manufacture, and/or provide inaccurate dosing of released fluid, difficult to clean, and do not provide any statistical analysis of usage.

Accordingly, a need exists for an inexpensive, compact, and small electronically controlled liquid dispenser for universal placement such as in a clinical setting, public conveniences, or other high footfall areas. Moreover, a need exists for an inexpensive liquid dispenser that is easily maintainable and allows controlled dispensing of fluid such as detergent irrespective of different viscosities.

Thus, it is an object of the present invention to provide further and improved liquid dispensing systems useful in a clinical setting, public conveniences, or other high footfall areas which overcome the problems of the prior art systems.

### SUMMARY OF THE INVENTION

The present invention provides a liquid feeding assembly suitable for dispensing liquid material such as low viscosity alcohol solution, the liquid feeding assembly comprising at least one pressing means, a first semi-circular housing, a second semi-circular housing, a toothed transmitting gear housed within said liquid feeding assembly, and a resilient tube having an inlet and an outlet, wherein the toothed transmitting gear rotates around a central axis and further comprises at least one convex hub arranged peripherally to said central axis and which rotatably supports the at least one pressing means which is adapted to rotate about the convex hub in conjunction with the rotation of toothed transmitting gear, wherein a portion of resilient tubing is housed against a wall of the liquid feeding assembly, and at least one pressing means applies a continuous force against a portion of resilient tubing housed between at least one pressing means and wall of liquid feeding assembly to produce a pumping action when at least one pressing means is rotated by a driving mechanism, and further wherein the second semi-circular housing comprises a cut-away for exposing a portion of the toothed transmitting gear for mechanical meshing connection to a driving gear of a motor of the driving mechanism, wherein the second semi-circular housing further comprises interlocking means for connecting to the driving mechanism, and wherein the liquid feeding assembly is configured to be clamped and to be quickly separated from the driving mechanism. The liquid feeding assembly of the present invention allows simplified interaction with a driving mechanism of a liquid dispensing system and is simple in design and inexpensive to manufacture. Moreover, the present invention allows a user an interchangeable liquid feeding assembly that allows easy maintenance of a liquid dispensing system without said liquid dispensing system having to be returned to the manufacturer for maintenance. In addition, the inventive liquid feeding assembly allows the smooth dispensing of a fluid irrespective of its viscosity.

In detail, the present invention provides a liquid feeding assembly (500) suitable for dispensing liquid material such as low viscosity alcohol solution, the liquid feeding assembly comprising at least one pressing means (524), a first semi-circular housing (521), a second semi-circular housing (522), a toothed transmitting gear (513) housed within said liquid feeding assembly, and a resilient tube having an inlet and an outlet, wherein the toothed transmitting gear (513) rotates around a central axis (518) and further comprises at least one convex hub (232) arranged peripherally to said central axis (518) and which rotatably supports the at least one pressing means (524) which is adapted to rotate about the convex hub (232) in conjunction with the rotation of toothed transmitting gear (513), wherein a portion of resilient tubing (200) is housed against a wall of the liquid feeding assembly (500), and at least one pressing means applies a continuous force against a portion of resilient tubing (200) housed between at least one pressing means and wall of liquid feeding assembly (500) to produce a pumping action when at least one pressing means (524) is rotated by a driving mechanism (600) and wherein the second semi-circular housing comprises a cut-away (526) for exposing a portion of the toothed transmitting gear (513) for mechanical meshing connection to a driving gear (514) of a motor (512) of the driving mechanism (600), and wherein the second semi-circular housing further comprises interlocking means (520, 620) for connecting to the driving mechanism (600), and wherein the liquid feeding assembly (500) is configured to be clamped and to be quickly separated from the driving mechanism (600).

The resilient tubing (200) of the liquid feeding assembly according to the present invention may be housed against a wall of first semi-circular housing (521). In some embodiments of the present invention the toothed transmitting gear (513) is housed within second semi-circular housing (522). In some embodiments of the liquid feeding assembly according to the present invention the first semi-circular housing (521) and the second semi-circular housing (522) are coupled together by means of male female connection (520, 620) and further clamp resilient (200) tubing extending through liquid feeding assembly (500).

The liquid feeding assembly according to the present invention may have pressing means (24, 524) which are circular shaped and/or square shaped and/or triangular shaped and/or a combination thereof.

The outlet of resilient tube (200) of the liquid feeding assembly according to the present invention may have a nozzle (700) such as a jet dispensing nozzle and/or spray dispensing nozzle.

In a preferred embodiment the liquid feeding assembly according to the present invention is further characterised in that it comprises three pressing means (524) which are circular shaped, the three pressing means (524) rotatably supported on three separate convex hubs (232) in a triangular peripheral arrangement to central axis (518) of transmitting gear (513) and said pressing means (524) are further housed within first semi-circular housing (521) and second semi-circular housing (522) to apply a continuous pressing force against a portion of resilient tubing (200), and further said resilient tubing (200) comprising an outlet which is connected to a nozzle (700).

The present invention provides in a further aspect a liquid dispensing system in particular suitable for dispensing liquid material such as low viscosity alcohol solution. The liquid dispensing system comprises the liquid feeding assembly (500) as described herein and a driving mechanism (600), further characterised in that liquid feeding assembly (500) is separable from driving mechanism (600).

The driving mechanism may comprise a motor (512) comprising a toothed driving gear (514), the driving gear being arranged offset to the central axis of transmitting gear (513) to allow interaction of toothed driving gear (514) with toothed transmitting gear (513).

In some embodiments the liquid dispensing system according to the present invention may comprise a cover housing (20) and back housing (10) at least one of which is at least in part transparent for allowing visualisation of a dispensing reservoir and/or which cover housing (20) further comprises a receptacle (701) for containment of waste liquid.

If desired the liquid dispensing system according to the present invention may comprise an electronic circuit (40) comprising a processing unit (702) for controlling an actuating sensor (710) for dispensing of said liquid material, said processing unit (702) being pre-programmed to dispense a pre-defined volumetric amount of liquid material, and said further electronic circuit comprising a data interface circuit (708) for connecting to a further electronic circuit.

As mentioned above, the liquid feeding assembly and liquid dispensing system according to the present invention are particularly useful for dispensing low viscosity alcohol solution and/or dry handwash detergents e.g. gels etc. Therefore, the liquid feeding assembly or liquid dispensing system according to the present invention may be used for dispensing low viscosity alcohol solution and/or dry handwash detergents e.g. gels etc.

### BRIEF DESCRIPTION OF THE DRAWINGS

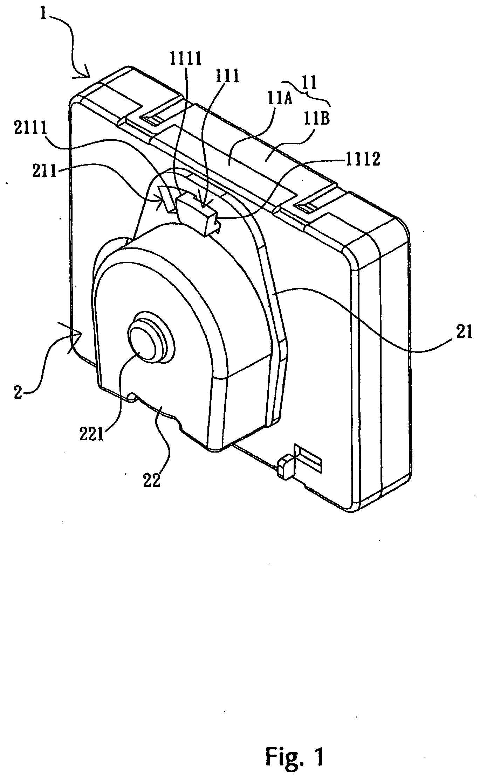

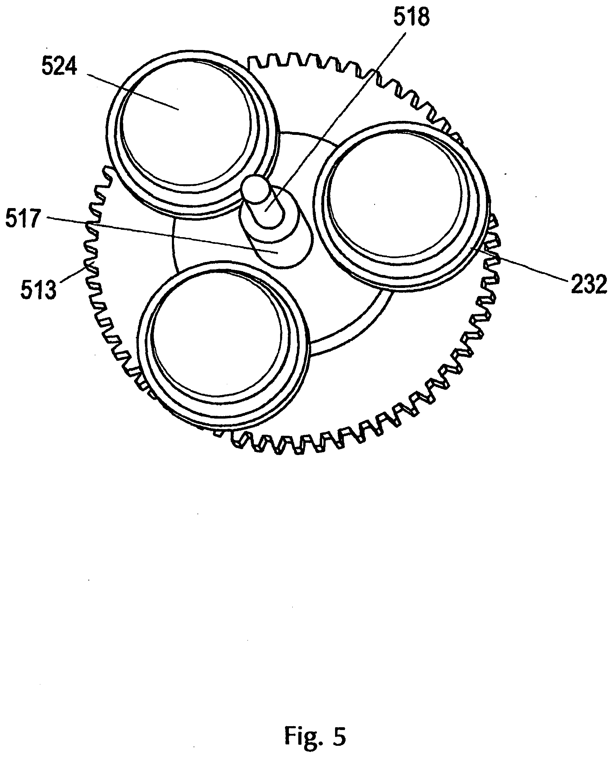

A better understanding of the features and advantages of the present invention will be obtained by reference to the following detailed description that sets forth illustrative embodiments by way of example only, in which the principles of the invention are utilised, and the accompanying drawings of which essentially, two embodiments are described. Figures 1 to 4 depict an embodiment not forming part of the present invention in which for example the motor is positioned in line with the central axis of the transmitting gear and the transmitting gear is positioned within the driving mechanism but not within the liquid feeding assembly. Figures 5 to 9 illustrate an embodiment in which the transmitting gear is positioned within the liquid feeding assembly and the motor is positioned offset to the central axis of the transmitting gear.
In more detail:
Figure 1 shows a perspective view of a driving mechanism of the present invention comprising a motor assembled with a liquid feeding assembly according to an embodiment not forming part of the present invention;
Figure 2 shows a perspective view of the driving mechanism of Figure 1 but in a different orientation according to an embodiment of the present invention;
Figure 3 shows an exploded perspective view of the constituent parts of the driving mechanism of Figure 1 comprising a motor and driving gear and a liquid feeding assembly comprising a rotating disk according to an embodiment not forming part of the present invention;
Figure 3a shows a partial enlarged diagram of Figure 3 according to an embodiment not forming part of the present invention;
Figure 4 shows an exploded perspective view of the constituent parts of the driving mechanism of Figure 1 and the constituent parts of the liquid feeding assembly comprising a rotating disk and pressing wheels according to an embodiment not forming part of the present invention;
Figure 4a shows a partial enlarged diagram of Figure 4 according to an embodiment not forming part of the present invention;
Figure 5 shows a schematic view of transmitting gear forming part of rotating disk of liquid feeding assembly according to another particularly preferred embodiment of the present invention;
Figure 6 shows a schematic view of the transmitting gear of figure 5 accommodated in first housing of liquid feeding assembly according to an embodiment of the present invention;
Figure 7 shows a schematic view of first and second housing of liquid feeding assembly, with second housing provided with a cut-away to expose toothed rim of gear according to an embodiment of the present invention; the transmitting gear is as shown in figures 5 and 6;
Figure 8 shows a schematic view of a driving mechanism depicting driving mechanism housing and a generally circular opening and provided with a motor according to an embodiment of the present invention; said driving mechanism is particularly useful for driving the liquid feeding assembly as shown in figures 5 to 7.
Figure 9 shows a schematic view of the liquid housing system of Figures 5 to 7 integrated with a driving mechanism and connected to a motor according to an embodiment of the present invention;
Figure 10 shows a simplified block diagram of electronic circuit for controlling motor of dispensing pump system according to embodiments of the present invention; Figure 10 may be realized for both embodiments (Figures 1 to 4 and Figures 5 to 9).
Figure 11 shows a schematic view of the driving mechanism and liquid feeding assembly assembled within the liquid dispensing system according to an embodiment of the present invention; the liquid feeding assembly and driving mechanism shown is the one of Figures 1 to 4 but the same principle applies to the liquid feeding assembly and driving mechanism of Figures 5 to 9.
Figure 12 shows the liquid dispensing system of the present invention comprising a cover panel and a back panel for positioning of driving mechanism and liquid feeding assembly according to embodiments of the present invention. The liquid feeding assembly and driving mechanism shown is the one of Figures 1 to 4 but in principle the same set-up may be realized with the liquid feeding assembly and driving mechanism of Figures 5 to 9.

### DETAILED DESCRIPTION OF THE INVENTION

Figure 1 shows a perspective view of a driving mechanism (1) comprising a motor assembled with a liquid feeding assembly (2) according to an embodiment not forming part of the present invention. Driving mechanism (1) can be fastened in the liquid dispensing system (100) of the present invention, and a liquid feeding assembly (2) arranged on a side of driving mechanism (1) can be quickly installed and removed. Although not shown in the current figure a resilient tube (200) for feeding and dispensing liquid material from a reservoir is housed within liquid feeding assembly (2). Quick removable liquid feeding assembly (2) used for the liquid dispensing system is clamped on one side of housing (11) driving mechanism (1). Further provided is a first fastener (111) which corresponds to one side of the liquid feeding assembly (2) for allowing liquid feeding assembly (2) to clamp on housing (11).

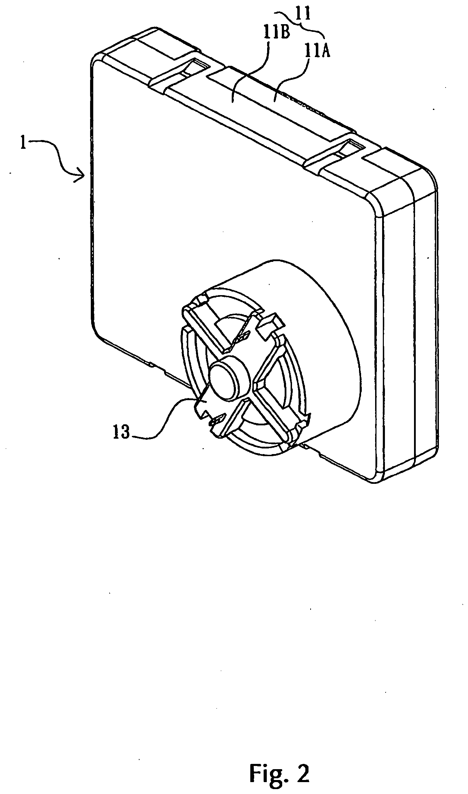

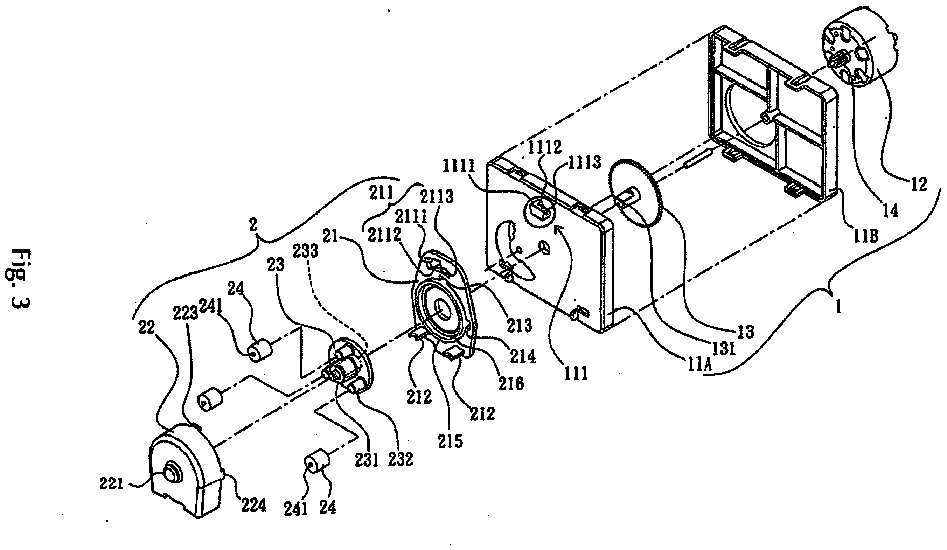

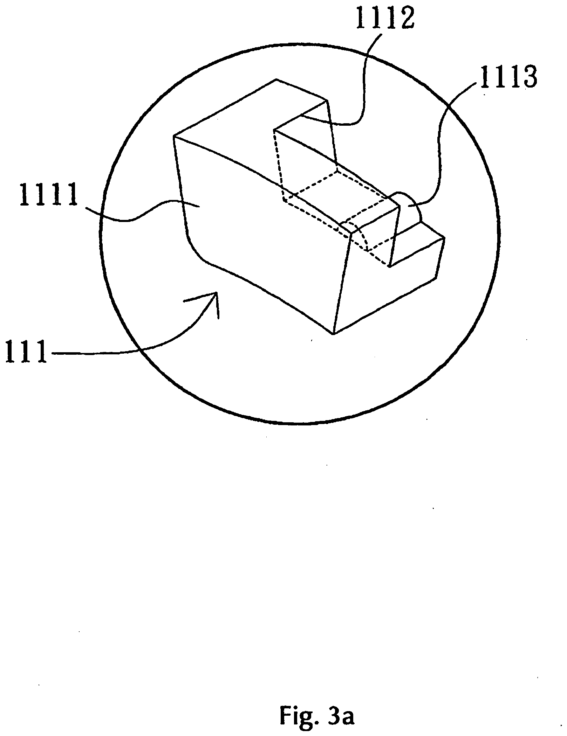

Figure 2 shows a perspective view of the driving mechanism of Figure 1 but in a different orientation and removed from the liquid dispensing system of the present invention for the purposes of clarity. Motor (12) and a transmitting gear (13) are fastened on another side of the housing (11) which is different from the side of the liquid feeding assembly (2). Transmitting gear (13) is arranged within housing (11) and arranged in a general parallel orientation to shaft of motor which is seen more clearly in Figure 3.

Figure 3 shows an exploded perspective view of the constituent parts of the driving mechanism of Figure 1 comprising a motor and driving gear and a liquid feeding assembly comprising a rotating disk according to an embodiment of the present invention. Driving gear (14) comprising a toothed rim is coupled with the main shaft of the motor (12) and connected to a toothed transmitting gear (13) for rotational driving. Liquid feeding assembly (2) is generally configured to be clamped and to be quickly separated from driving mechanism and comprises a base (21) clamped on one side of the housing (11A). Base (21) comprises second fastener (211) that corresponds to first fastener (111) to allow the liquid feeding assembly (2) to be quickly separated from and clamped with driving mechanism (1). A cover (22) is clamped on the free side of base (21).

Therein, the cooperative manipulation of first fastener (111) and second fastener (211) can allow rapid positioning and clamping of liquid feeding assembly (2) on driving mechanism (1). Such manipulation can realize the purpose of fast removal, fast assembly and especially realize an effect of modularization. Hence when any of the driving mechanism (1) or the liquid feeding assembly (2) has failed, it can be easily maintained or replaced, so as to shorten the time needed for maintenance and also reduce the maintenance cost.

Provided between base (21) and cover (22) is a rotating disk (23). In assembled form, rotating disk (23) is protected by cover (22), and is freely arranged on a side of base (21). Axially arranged on one side of rotating disk (23) is a main convex cylinder (231) and arranged peripheral of the main convex cylinder (231) are several convex hubs (232). The side of the rotating disk (23) without convex hubs (232) is axially connected with transmitting gear (13) to allow rotating disk to be driven by transmitting gear (13). Arranged on each convex cylinder (232) are pressing means (24). Although pressing means (24) are depicted as circular wheels, pressing means (524) could be square shaped and/or triangular shaped and/or a combination thereof.

Motor (12) can also sequentially drive driving gear (14) and transmitting gear (13) for allowing rotation of rotating disk (23), and further for allowing pressing wheel (24) to press in a continuous sequence and repetition on resilient tube (200) installed between pressing wheel (24) and housing (22) (and seen more clearly in Figure 5), to further allow the liquid in resilient tubing (200) to be supplied according to a set quantity by the rolling shift and pressing of pressing wheel (24). As is further shown in the exploded schematic view of the Figure 3, the difference between the diameter of the main convex cylinder (231) and the diameter of the pressing wheel (24) should be subject to one of the following conditions: the diameter of main convex cylinder (231) is equal to the diameter of the pressing wheel (24), or the diameter of main convex cylinder (231) is larger than the diameter of the pressing wheel (24).

Therein, the non-touching configuration between the pressing wheel (24) and the main convex cylinder (231) can prevent the pressing wheel from decreasing its pressing effect caused by the friction from the touching of the formerly mentioned two parts, to allow smooth rotating of the pressing wheel (24).

The implementation of different diameters of the main convex cylinder (231) and the pressing wheel (24), can allow the application of resilient tubing (200) with larger diameter, to be realized with the effect of larger single amount of detergent output. Similarly, the implementation of the same diameter of the main convex cylinder (231) and the pressing wheel (24) can allow the application of resilient tubing (200) with a normal diameter, thus realising the effect of moderate single amount of detergent output. The configuration can vary the single amount of detergent output allowing freedom for the user based on his requirements.

Further shown in Figure 3, and forming part of periphery of base (21) and arranged opposite to female aperture (2111) are latching plates (212). Latching plates (212) are provided with a 'U' shaped groove to receive resilient tubing (200) and serve to clamp tubing (200) in correct position during rotation of rotating disk (23). Mechanical clamping of resilient tubing (200) between latching plate (212) and latching groove (222) prevents resilient tubing (200) from shifting. Such arrangement allows for smooth liquid output.

Further arranged on base (21) is outer ring (215). Outer ring (215) is arranged to be co-centric with positioned rotating disk (23) and has a diameter slightly larger than that of rotating disk (23). An inner top ring (216) is installed between base (21) and the rotating disk (23) and which is arranged to be lower than outer ring (215).

The configuration of the outer ring (215) not only facilitates installation and assembly of base (21) with cover but also prevents the rotating disk (23) from excessive shaking, shifting or deviating movement, thus reducing the likelihood of mechanical failure. Furthermore, the configuration of inner top ring (216) may prevent the rotating disk (23) from unsmooth operation due to relatively large touching area between base (21) and rotating disk (23).

Although not shown in the current figure, arranged between transmitting gear (13) and the driving gear (14) is a drive gear that can mesh with the transmitting gear (13) and the driving gear (14). As is further shown in the exploded schematic view of Figure 3, disposed on the centre of transmitting gear (13) is an axially installed latching rod (131) that can axially connect to rotating disk (23) of liquid feeding assembly (2). Consequently, the additional drive gear, after matching with transmitting gear (13) and driving gear (14), can produce different rotating speed and torque output effect, so as to adapt to various requirements by quick modification, to allow the liquid dispensing system of the present invention to be easily adaptable to consumer's application such as for fluid (e.g. detergents, liquid soap and so on) of various viscosity.

Referring now to the schematic exploded views of Figure 3a and Figure 3, fastener (111) is depicted as an arc-shaped mechanism, being of such shape that it is extruded out of the male block (1111) on the surface of the first housing (11). Arranged on the fixed end of male block (1111) is a slot (1112) that is provided with a positioning rib (1113). Positioning rib (1113) is on the inner bottom of the slot (1112). Second fastener (211) is also provided as an arc-shaped mechanism, being dimensionally larger than male block (1111). Such dimensions allow the male block (1111) to slide within buckling female aperture (2111). Female aperture (2111) corresponds to slot (1112) should be installed with an positioning projection (2112) that can snap into slot (1112), while the positioning convexity on the place corresponding to the positioning rib (1113) is depressively installed with a positioning projection (2112) for snapping the positioning rib (1113).

Therein, the implementation of the first fastener (111) and the second fastener (211) can facilitate fast installation and snap fitment by the user of the cooperation between male block (1111) and female aperture (2111). Further the positioning produced by the matching of the positioning projection (2112) and the slot (1112) and the matching of the positioning groove (2113) and the positioning rib (1113) can further reduce the possibility of shaking of liquid feeding assembly (2). Similarly, the implementation of first fastener (111) and second fastener (211) can not only facilitate installation but also realize fast removal, and also provide a stable cooperation between driving mechanism (1) and liquid feeding assembly (2).

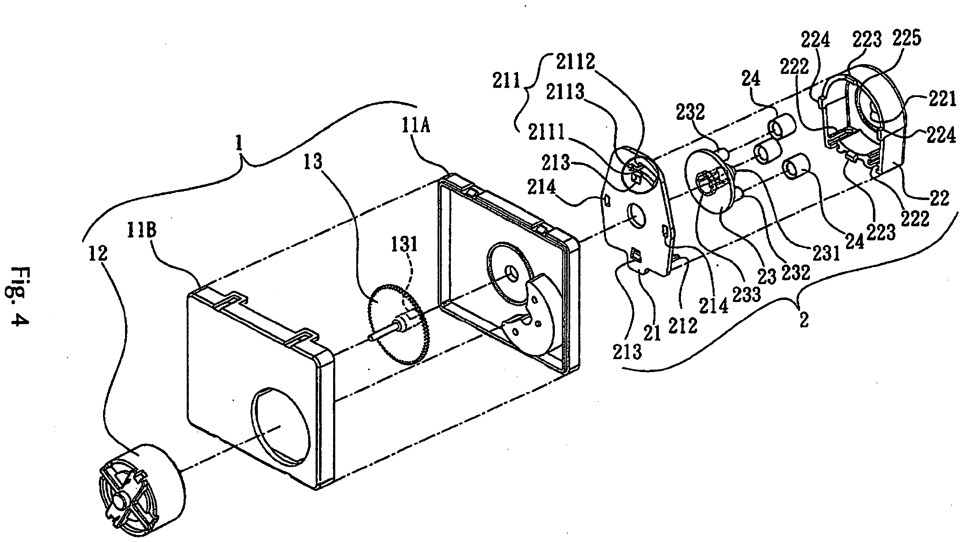

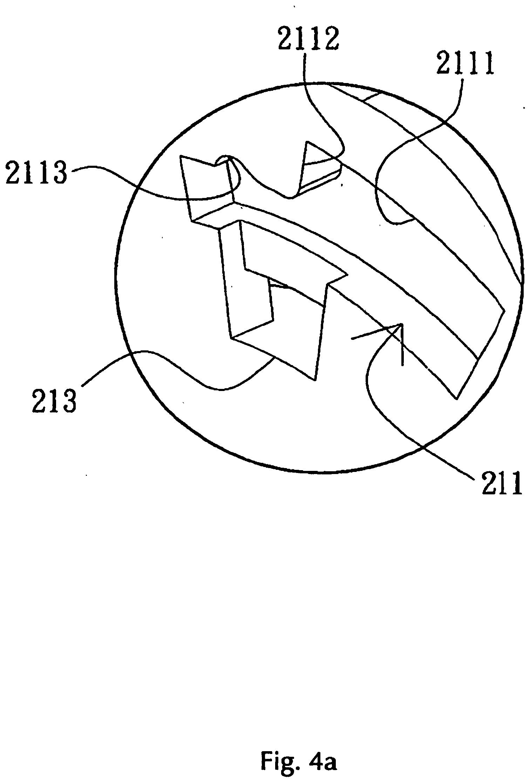

Referring now to the exploded schematic view of Figure 4, forming part of cover (22) is a depression (221). Depression (221) corresponds to main convex cylinder (231) when cover (22) is assembled with base (211) such that main convex cylinder (231) is positioned within depression (221). Configuration of depression (221) can allow main convex cylinder (231) to have a stable axial support to prevent the rotating disk (23) from shaking, shifting or deviating due to the rotational operation.

Cover (22) comprises grooves (222) which are placed to correspondingly receive latching plates (212). Grooves (222) are further provided to clamp the other side of resilient tubing (200) to allow positioning of tubing (200) by means of cooperation with latching plate (212). Arranged on cover (22) and corresponding to the positioning convex cylinder (241) on the free end of the pressing wheel (24), is a circular notch (225) for positioning the positioning convex cylinder (241). Configuration of circular notch (225) can simultaneously position the pressing wheel (24), and reduce shaking or shifting of the pressing wheel (24) thus producing 100% pressing effect on the resilient tubing (200) and allowing the liquid material in the resilient tubing (200) to be smoothly supplied for usage. On the side of the rotating disk (23), that is to say, the side without convex cylinder (232) is an axially arranged latching aperture (233). Latching aperture (233) is preferably dimensioned to engage latching rod (131) such that rotating disk (23) can be controlled by motor (12).

On the periphery of both top and bottom of cover (22), is an L-shaped main latch (223). Similarly, on the periphery of both left and right side of cover (22) are further L-shaped auxiliary latches (224). Arranged on base (21) and corresponding to the main latch (223) and the auxiliary latch (224), are main groove (213) and auxiliary groove (214) which correspond to and can be matched with the main latch (223) and the auxiliary latch (224) during assembly. Consequently, corresponding latches (223, 224), and grooves (213, 214) can allow base (21) and the cover (22) to be stably matched without affecting the clamping of first fastener (111) and second fastener (211). Such arrangement also allows the fast separation and assembly between base (21) and cover (22) after the removal of liquid feeding assembly (2).

As is further shown in the exploded schematic view of Figures 3 and 4, housing (11) comprising first housing (11A) allows liquid feeding assembly (2) to clamp on its one side and a second housing (11B) that is clamped onto the other side of the first housing (11A) corresponding to the first housing (11A). Therefore, the configuration of such housing (11) can facilitate the manufacturer's production and follow-up maintenance, and also effectively protect the devices within so that stable support is provided.

Figure 4a shows a second fastener (211) being of an arc-shaped mechanism, and larger than the male block (1111). Such configuration allows male block (1111) (of Figure 3a) to slide within female aperture (2111) to allow attachment between driving mechanism and liquid feeding assembly.

Figure 5 shows a schematic view of a combined rotating disk and transmitting gear (513) of liquid feeding assembly (500) according to an embodiment of the present invention. Toothed transmitting gear (513) is removed from housing (521, 522) of liquid feeding assembly (500) for the purposes of clarity. As can be seen in the present figure, transmitting gear (513) comprises a toothed rim which, as will be described later, is provided to mesh with driving gear (514) of motor (512). Diameter of toothed transmitting gear (513) can be varied according to the requirements of the user. In particular, diameter of toothed transmitting gear (513) can be varied to allow for different output torque requirements from motor (512).

Toothed transmitting gear (513) comprises a main convex cylinder (517). Main convex cylinder (517) has a through hole for receiving a main shaft (518). Main shaft (518) is connected between first semi-circular housing and second semi-circular housing (not shown) of liquid feeding assembly (500) thus allowing transmitting gear (513) to axially rotate around a central axis by means of meshed interconnection with driving gear (514) of motor (512). Toothed transmitting gear (513) further comprises at least one convex hub (232) arranged peripherally to said central axis and which rotatably supports at least one pressing means (524). Pressing means (524) such as a wheel is adapted to rotate about convex hub (232) in conjunction with the rotation of toothed transmitting gear (513). Preferably, three pressing means (524) are provided and are suitably rotatably supported on three separate convex hubs (232) in a triangular peripheral arrangement to central axis of toothed transmitting gear (513). Purpose of said pressing means (524) is to apply a continuous pressing force against a portion of resilient tubing which extends within first housing (521) and second housing (522) of liquid feeding assembly (500). Although pressing means (524) is depicted as a circular wheel, pressing means (524) could be square shaped and/or triangular shaped and/or a combination thereof. Further provided and forming part of free end of pressing means (524) are circular protrusions (525). Circular protrusions (525) correspond to and are received in a circular groove (not shown) arranged within first housing (521) such that shifting or deviating movement of pressing means (524) during rotation of transmitting gear (513) is minimised.

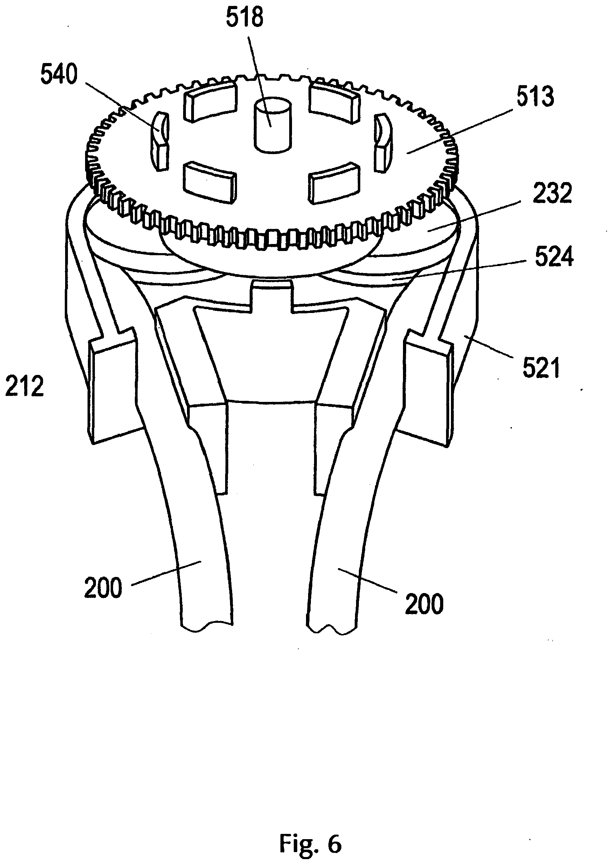

Turning now to Figure 6 which shows a schematic view of transmitting gear (513) accommodated in first housing (521) of liquid feeding assembly (500) according to an embodiment of the present invention. Resilient tubing (200) extends within liquid feeding assembly (500) and is clamped in position in correct position between first housing and second housing by means of two 'U' shaped grooves (212). Clamping of resilient tubing (200) in position ensures that tubing (200) remains in correct position during rotational movement of toothed transmitting gear (513). Diameter of resilient tubing (200) may be selected depending on volumetric output required at dispensing nozzle and/or viscosity of fluid to be dispensed. Correspondingly, diameter of pressing wheels (524) may be selected depending on the diameter of resilient tubing (200). Pressing wheels (524) are rotatably supported on each convex hub (232) and axially rotate thereon, thus allowing pressing wheel (524) to provide a continuous force against resilient tubing (200) installed between pressing wheel (524) and housing (521). Consequently, liquid supplied in resilient tubing (200) from a reservoir can be supplied by means of nozzle (such as a spray nozzle and/or jet nozzle) according to a set quantity by the rolling shift action of pressing wheels (524). Further arranged on transmitting gear (513) and arranged on opposite side to the positioned pressing wheels (524) are spacers (540). Spacers (540) serve to minimise frictional contact area between gear (513) and inner of second housing (522).

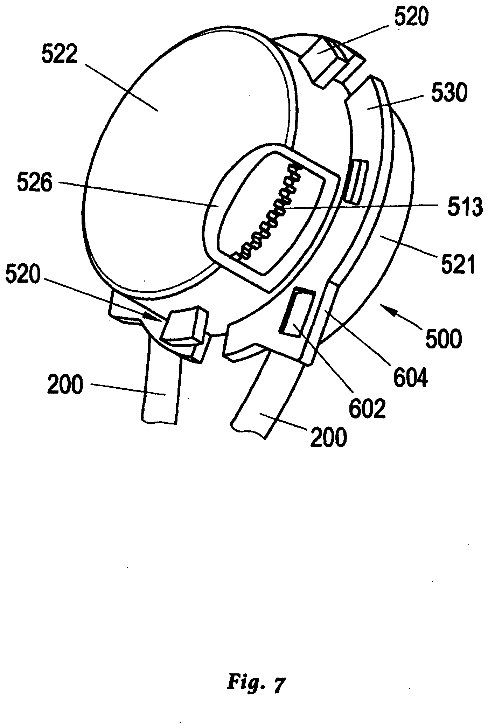

Figure 7 shows a schematic view of first and second housing of liquid feeding assembly, with second housing provided with a cut-away to expose toothed rim of gear according to an embodiment of the present invention. Liquid feeding assembly (500) is generally configured to be clamped and to be quickly separated from driving mechanism (600) as will be discussed later and comprises a first semi-circular housing (521) assembled to second semi-circular housing (522) by means of mechanical male female interaction such as a latching plate (602) interacting with latching groove (604). Although not depicted in the current figure, main shaft (518) is connected along a central axis between first semi-circular housing (521) and second semi-circular housing (522). Main shaft (518) allows transmitting gear (513) to rotate around central axis when meshed to an actuated driving gear (514). Further shown in the current figure and forming part of second semi-circular housing (522) is a peripheral and circumferential over-hang (530). By means of circumferential over-hang (530), outer diameter of second semi-circular housing (522) is provided to be somewhat greater than the outer diameter of first semi-circular housing (521).

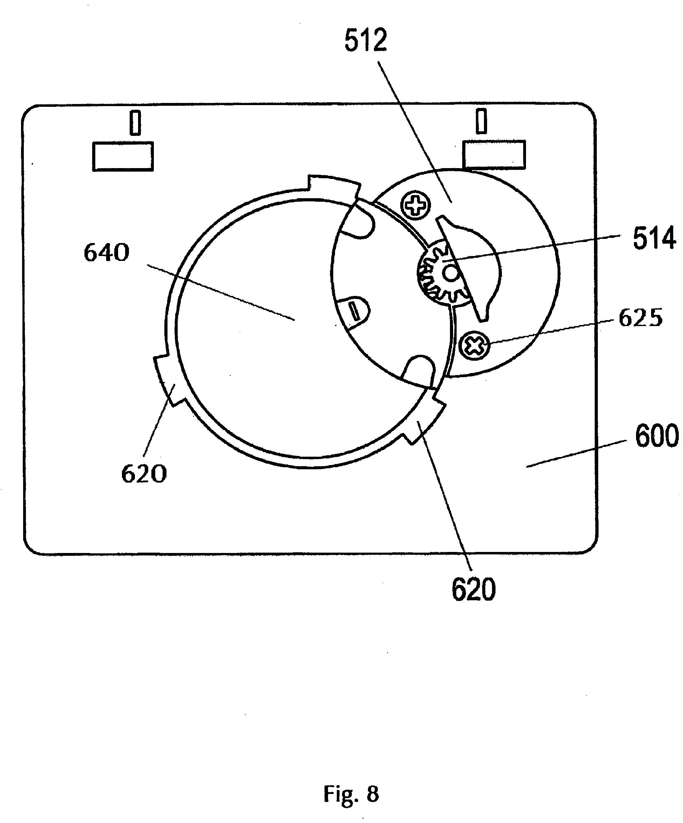

Circumferentially arranged on second housing (522) are first and second latching plates (520). First and second latching plates (520) are arranged to correspond to grooves (620) formed on driving mechanism (600) as is be described with referenced to Figure 8. Purpose of first and second latching plates (520) interacting with grooves (620) of driving mechanism (600) is to allow liquid feeding assembly (500) to slidably lock in position when liquid feeding assembly and driving mechanism are assembled together. Cut-away (526) of upper housing (522) is sufficiently dimensioned to expose a portion of transmitting gear (513) for mechanical meshing interconnection to driving gear (514) of motor (512) when liquid feeding assembly (500) is correctly assembled with driving mechanism (600).

Figure 8 shows a schematic view of driving mechanism depicting driving mechanism housing and a generally circular opening and provided with a motor according to an embodiment of the present invention. Generally circular opening (640) comprises circumferentially arranged grooves (620) which are dimensioned for accepting latching plates (520) of liquid feeding assembly (500). Since the purpose of interaction between grooves (620) and plates (520) is to slidably lock liquid feeding assembly (500) within housing of driving mechanism (600) and to minimise vibrational movement therebetween it is preferable that three grooves are provided. More preferably are the provision of three grooves (620) being arranged in a general triangular circumferential arrangement of general circular opening (640). To provide a suitable locking interaction between liquid feeding assembly (500) and driving mechanism (600), grooves (620) are arranged equidistance from each other.

Disposed between two circumferential arranged grooves (620) of driving mechanism (600) is a motor (512) comprising a driving gear (514). Motor (512) is secured in place by means of first and second screws (625) arranged either side of driving gear (514) of motor (512). First and second screws (625) ensure that vibrational movement of motor by means rotating driving gear (514) is minimised. Motor (512) is generally arranged offset from general circular opening of driving mechanism (600) and in particular, toothed driving gear (514) of motor (512) is circumferentially arranged about general circular opening (640). Purpose of toothed driving gear (514) is to mesh with toothed transmitting gear (513) when liquid feeding assembly (500) is assembled within driving mechanism (600).

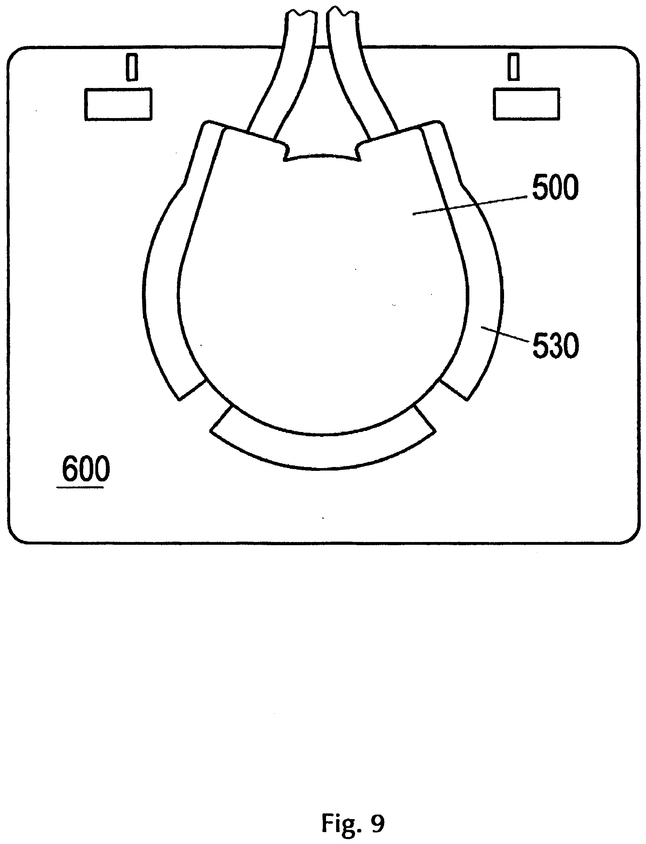

Figure 9 shows a schematic view of the liquid feeding assembly (500) of Figures 5 to 7 integrated with driving mechanism (600) which comprises motor (512) according to an embodiment of the present invention. Motor (512) is electrically connected by means of cable to an electronic circuit. Preferably, second housing (522) of liquid feeding assembly (500) is arranged to fit within general circular opening (640) of driving mechanism. Depth of insertion of second housing (522) of liquid feeding assembly (500) within general circular opening (640) of driving mechanism (600) depends on over-hang (530) of second housing (522). That is to say, over-hang (530) limits the depth of insertion and thus provides a natural stop for placement of liquid feeding assembly (500) within general circular opening (640) of driving mechanism (600). To provide a unitary assembly i.e. between liquid feeding assembly (500) and driving mechanism (600), liquid feeding assembly (500) is rotated in a general anti-clockwise direction such that grooves (620) accept latching plates (520) of second housing (522) of liquid feeding assembly (500) and thus lock such assembly (500) within driving mechanism (600). Further, such an interaction and manipulation ensures that partially exposed toothed transmitting gear (513) provided by means of cut-away (526) meshes with toothed driving gear (514) of motor (512), thus providing a unitary assembly. Toothed driving gear (514) is thus arranged offset to the central axis of transmitting gear (513) to allow interaction therebetween. As will appreciated by those skilled in the art, circumferential over-hang (530) of second housing (522) ensures liquid feeding assembly (500) is rigidly supported when assembled with driving mechanism (600). Such an arrangement further ensures that vibrations caused by activated motor (512) and thus rotation of toothed gears (513, 514) do not displace liquid feeding assembly (500) from driving mechanism (600).

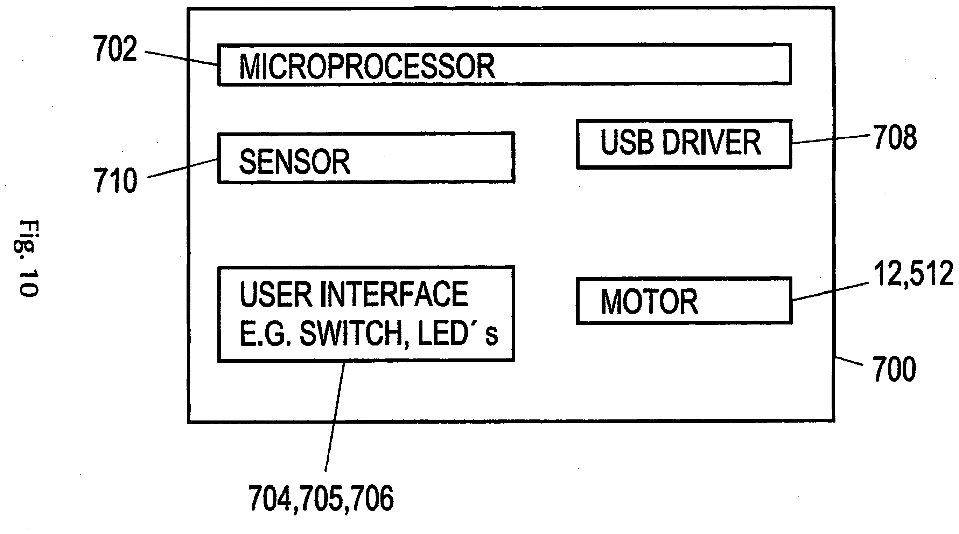

Figure 10 shows a simplified block diagram (700) of an electronic circuit (40) for controlling motor (512) of dispensing pump system according to embodiments of the present invention. Electronic circuitry (40) can be designed using a processing unit (702) such as the PIC16F684 microcontroller and which is available from Microchip Technology Inc., 2355 West Chandler Blvd. Chandler, Arizona, USA. Processing unit (702) can serve the following control functions: (1) control operating sensor to allow automatic activation of liquid dispensing system when user places hand(s) within range of sensor; (2) control discharge cycle of pump to allow user required or predefined volumetric discharge of fluid; (3) control speed of motor; (4) store dispensed fluid data for example usage data of liquid dispensing system; (5) control a data interface circuit such as a USB driver (708) or control connection to other communication protocols such as Bluetooth®, Internet to allow data e.g. usage data to be transferred to an operator, (6) control direction of motor driving gear; (7) control any user interface devices for example LED's, or displays.

Processing unit (702) also comprises a control circuit to control operating sensor for example infra-red sensor (710) of liquid dispensing system. Control circuit may comprise a filter circuit to ensure non-occurrence of false triggering of operating sensor and consequently motor (512). A memory circuit and optionally integrated within processor can store data (for example usage data) and the processing unit operating program. Electronic circuitry also includes a switch (704) to allow maintenance operatives to select one of many predefined operating programs. For example one operating program may be selected to provide a control discharge cycle of a small volume of liquid such as 1.5mL such that pressing wheels (24, 524) are controlled to rotate through one revolution. Another operating program may be selected to provide a control discharge cycle of 3.0mL, such that pressing wheels (24, 524) of the liquid feeding assembly are controlled to rotate for example through two revolutions. Another operating program may be selected to provide a controlled discharge cycle of a volume of 4.5mL of liquid. In this case, pressing wheels (24, 524) may be controlled to rotate through, for example, three revolutions. Further, another operating program may be selected to provide a control discharge cycle of 6.0mL, with pressing wheels (24, 524) controlled to rotate for example through four revolutions. Operative and user feedback of selected program and other information (such as whether liquid dispensing system requires maintenance) can take various forms such as displays or preferably tri-colour LED's (706). Electronic circuitry also include a disabling switch (705) such that liquid dispensing system is de-activated when cover (20) is removed or opened from back panel (10). Typically, electronic circuit can be operated from 4 x 1.5V batteries such as AA, LR6. Low power detection circuit may also be provided within electronic circuit (700) such that an operator is notified by means of LED's (706) that batteries require replacing. LED's may trigger a light sequence which is different to that of normal operating mode to notify of a low battery condition. Alternatively, liquid dispensing system of the present invention may be powered from a suitable electrical supply.

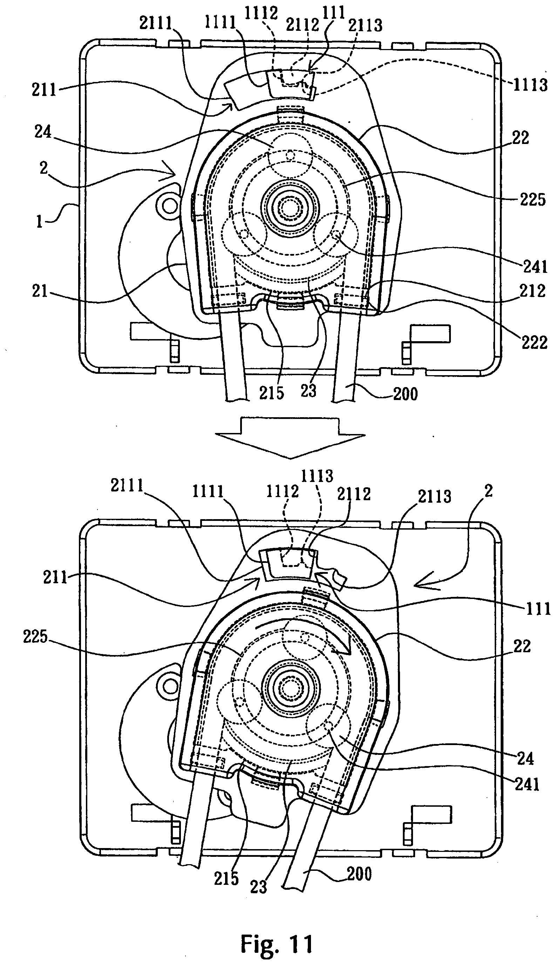

Figure 11 shows a schematic perspective view of a driving mechanism cooperating with a liquid feeding assembly according to embodiments of the present invention. As shown in the current figure, if a user desires to separate the driving mechanism (1) from the liquid feeding assembly (2), he or she can hold the base (21) or the cover (22) by hand, and then to rotate according to the direction opposite to the direction of blocking, thus the positioning groove (2113) may separate from the positioning rib (1113), and at the same time the positioning projection may separate from the corresponding slot (1112). When the liquid feeding assembly (2) is rotated to the place of the positioning projection (2112) and completely removed away from the corresponding slot (1112), the user can hold the base (21) or the cover (22) by hand, and then separate the female aperture (2111) and the male block (1111) thus allowing quick release of the liquid feeding assembly (2). Similarly, if a user desires to separate liquid feeding assembly (500) from driving mechanism (600), then he or she can turn second housing (522) in a general clockwise direction in relation to driving mechanism such that latching plates (520) are released from grooves (620). Such manipulation then releases liquid feeding assembly (500) from driving mechanism (600).

For re-installation, the user reverses the above-mentioned procedures to realize quick assembly of the liquid feeding assembly (2). That is to say, the female aperture (2111) is located into the male block (1111), and the base (21) or the cover (22) is rotated by hand. Projection (2112) snaps into slot (1112), and rotated to the positioning groove (2113) which allows complete coupling with the positioning rib (1113) to be realized.

The configuration of removable feeding assembly from driving mechanism affords the user with a flexible liquid dispensing system. For example, the user may wish to user a liquid soap material in high footfall different to that in a clinical setting. For example, in the clinical setting the emphasis is on providing liquid soap that exclusively clean, whereas in areas of high footfall areas the emphasis may be to provide a liquid material that not only cleans for example the hands but also provides a moisturising effect. Consequently, the latter liquid material may be of higher viscosity. By using the liquid dispensing system of the present invention, the user may therefore select the liquid feeding assembly (optionally containing transmitting gear) or driving mechanism (optionally containing transmitting gear) which is particularly suitable for the composition of liquid material to be dispensed. Thus, the liquid material can be smoothly dispensed by simple modification of the driving mechanism (1, 600) so that the output torque and the rotating speed of the driving mechanism is altered.

Similarly, the user may select the diametric properties of resilient tubing (200) to be particularly suitable to the liquid material to be dispensed. As previously described, such a modular approach allows easy changes to be made to the liquid dispensing system (optionally containing transmitting gear) or driving mechanism (optionally containing transmitting gear) without the requirement of removal and off-site maintenance of the dispensing system. Furthermore, since liquid feeding mechanism can be separated from driving mechanism (1), failure in one or both mechanisms can allow on-site repair which reduces costs to the operator.

Since rotating disk (23) is rotated by means of the axis of the driving gear (13), detergent of different standards can be smoothly dispensed by modifying the parts of transmitting gear (13) and the driving gear (14) of the driving mechanism (1) to alter the output torque and the rotating speed of the driving mechanism (1), thus, a little modification to the driving mechanism (1) will allow it to be applied to detergents of various density, and allow a remarkable improvement to the applicability and the practicability of the practical new model, and realized cost reduction for manufacturer's updating.

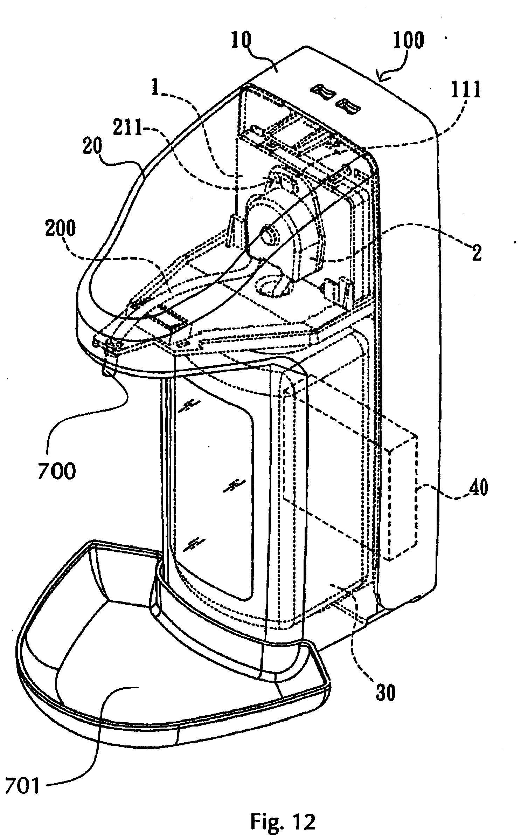

Figure 12 shows the liquid dispensing system of the present invention comprising a cover panel and a back panel for positioning of driving mechanism and liquid feeding assembly according to embodiments of the present invention. Liquid dispensing system is composed of a back panel (10) for positioning of driving mechanism (1) and liquid feeding assembly (2). A cover (20) is installed on the front side of the back panel (10) and a soap lotion unit such as a reservoir (30) is arranged between the back panel (10) and the outer cover (20). Preferably, cover (20) is transparent or at least transparent in part, such that a maintenance operative or user can easily view whether reservoir (30) needs to be refilled. Arranged between back panel (10) and the outer cover (20) is an electronic circuit (40) for controlling the operation of driving mechanism (1, 600). Although not depicted in the current figure, one end of resilient tubing (200) is placed within reservoir (30) for supplying liquid material e.g. liquid soap, through resilient tubing (200). Other end of resilient tubing (200) is connected to a nozzle (not shown). Nozzle may be inter-changed by an operative to provide a jet flow of released fluid or to provide a spray flow of released fluid. Nozzle is arranged within cover (20) and preferably positioned to allow released fluid to flow onto the desired area to be cleaned. Also provided is a removable receptacle (701) which is positioned to contain any fluid remnants from the nozzle or the hands.

It will be appreciated from the above-mentioned description, the implementation of the driving mechanism (600) and the liquid feeding assembly (500) of the present invention can reduce environmental pollution, complying with the modern concepts of environmental protection and people-oriented green products, while at the same time giving considerations to the consumer, environmental protection, convenient and fast updating and maintenance, to reduce maintenance cost and shorten the maintenance time, providing more applicability and practicability.

Various embodiments of the invention have been described above. The descriptions are intended to be illustrative, not limitative. Thus, it will be apparent to one skilled in the art that certain modifications may be made to the invention as described without departing from the scope of the claims set out below.

## Claims

1. A liquid feeding assembly (500) suitable for dispensing liquid material such as low viscosity alcohol solution, the liquid feeding assembly comprising at least one pressing means (524), a first semi-circular housing (521), a second semi-circular housing (522), a toothed transmitting gear (513) housed within said liquid feeding assembly, and a resilient tube having an inlet and an outlet, wherein the toothed transmitting gear (513) rotates around a central axis (518) and further comprises at least one convex hub (232) arranged peripherally to said central axis (518) and which rotatably supports the at least one pressing means (524) which is adapted to rotate about the convex hub (232) in conjunction with the rotation of toothed transmitting gear (513), wherein
a portion of resilient tubing (200) is housed against a wall of the liquid feeding assembly (500), and the at least one pressing means applies a continuous force against a portion of resilient tubing (200) housed between the at least one pressing means and the wall of the liquid feeding assembly (500) to produce a pumping action when at least one pressing means (524) is rotated by a driving mechanism (600), **characterized in that** the second semi-circular housing comprises a cut-away (526) for exposing a portion of the toothed transmitting gear (513) for mechanical meshing connection to a driving gear (514) of a motor (512) of the driving mechanism (600), such that the liquid feeding assembly (500) is configured to be clamped and to be quickly separated from the driving mechanism (600), and wherein the second semi-circular housing further comprises interlocking means (520) for connecting to the driving mechanism (600), to allow the liquid feeding assembly (500) to slidably lock in position when the liquid feeding assembly and the driving mechanism (600) are assembled together.

2. A liquid feeding assembly according to any of the preceding claims, **characterised in that** resilient tubing (200) is housed against the wall of the first semi-circular housing (521).

3. A liquid feeding assembly according to any of the preceding claims, **characterised in that** the toothed transmitting gear (513) is housed within the second semi-circular housing (522).

4. A liquid feeding assembly according to any of the preceding claims, **characterised in that** the first semi-circular housing (521) and the second semi-circular housing (522) are coupled together by means of male female connection (602, 604) and further clamp the resilient (200) tubing extending through liquid feeding assembly (500).

5. A liquid feeding assembly according to any of the preceding claims, **characterised in that** pressing means (524) is circular shaped and/or square shaped and/or triangular shaped and/or a combination thereof.

6. A liquid feeding assembly according to any of the preceding claims, further **characterised in that** outlet of resilient tube (200) is connected to a nozzle (700) such as a jet dispensing nozzle and/or spray dispensing nozzle.

7. A liquid feeding assembly according to claim 6, **characterised in that** the assembly (500) comprises three circular shaped pressing means (524) rotatably supported on three separate convex hubs (232) in a triangular peripheral arrangement to central axis (518) of transmitting gear (513) and said pressing means (524) are further housed within first semi-circular housing (521) and second semi-circular housing (522) to apply a continuous pressing force against a portion of resilient tubing (200).

8. A liquid dispensing system suitable for dispensing liquid material such as low viscosity alcohol solution, and comprises the liquid feeding assembly (500) according to claim 1 and a driving mechanism (600), further **characterised in that** liquid feeding assembly (500) is separable from driving mechanism (600).

9. A liquid dispensing system according to claim 8, further **characterised in that** driving mechanism comprises a motor (512) comprising a toothed driving gear (514) and which is arranged offset to the central axis of transmitting gear (513) to allow interaction of toothed driving gear (514) with toothed transmitting gear (513).

10. A liquid dispensing system according to claim 8 to 9, further **characterised in that** the system comprises a cover housing (20) and back housing (10) at least one of which is at least in part transparent for allowing visualisation of a dispensing reservoir and/or which cover housing (20) further comprises a receptacle (701) for containment of waste liquid.

11. A liquid dispensing system according to any of claims 8 to 10, further **characterised in that** said system comprises an electronic circuit (40) comprising a processing unit (702) for controlling an actuating sensor (710) for dispensing of said liquid material, said processing unit (702) is pre-programmed to dispense a pre-defined volumetric amount of liquid material, and said further electronic circuit comprises a data interface circuit (708) for connecting to a further electronic circuit.

12. A liquid dispensing system according to any of claims 8 to 11, wherein the toothed transmitting gear (513) is arranged between the at least one pressing means (524) and said driving mechanism (600).

## Patentansprüche

1. Flüssigkeitszufuhranordnung (500), welche zur Abgabe eines flüssigen Stoffes, wie beispielsweise einer Alkohollösung mit niedriger Viskosität, geeignet ist, wobei die Flüssigkeitszufuhranordnung mindestens ein Pressmittel (524), ein erstes halbkreisförmiges Gehäuse (521), ein zweites halbkreisförmiges Gehäuse (522), ein Übersetzungszahnrad (513), welches innerhalb der Flüssigkeitszufuhranordnung untergebracht ist, und einen elastischen Schlauch, welcher einen Eingang und einen Ausgang aufweist, umfasst, wobei das Übersetzungszahnrad (513) um eine Mittelachse (518) rotiert und außerdem mindestens eine konvexe Nabe (232) umfasst, die peripher zu der Mittelachse (518) angeordnet ist und die drehbar das wenigstens eine Pressmittel (524) trägt, das so konfiguriert ist, dass es gemeinsam mit der Rotation des Übersetzungszahnrads (513) um die konvexe Nabe (232) rotiert, wobei ein Abschnitt des elastischen Schlauchs (200) anliegend an einer Wand der Flüssigkeitszufuhranordnung (500) untergebracht ist, und das mindestens eine Pressmittel eine kontinuierliche Kraft auf einen Abschnitt des elastischen Schlauchs (200), der zwischen dem mindestens einen Pressmittel und der Wand der Flüssigkeitszufuhranordnung (500) untergebracht ist, ausübt, um eine Pumpwirkung zu erzeugen, wenn wenigstens ein Pressmittel (524) durch einen Antriebsmechanismus (600) gedreht wird, **dadurch gekennzeichnet, dass** das zweite halbkreisförmige Gehäuse einen Ausschnitt (526) umfasst, um einen Abschnitt des Übersetzungszahnrads (513) für eine mechanische Eingriffsverbindung mit einem Antriebszahnrad (514) eines Motors (512) des Antriebsmechanismus (600) zu exponieren, so dass die Flüssigkeitszufuhranordnung (500) so konfiguriert ist, dass sie an dem Antriebsmechanismus (600) befestigt und schnell von diesem abgelöst werden kann, und wobei das zweite halbkreisförmige Gehäuse außerdem Einrastmittel (520) zur Verbindung mit dem Antriebsmechanismus (600) umfasst, um ein gleitendes Einrasten der Flüssigkeitszufuhranordnung (500) zu ermöglichen, wenn die Flüssigkeitszufuhranordnung und der Antriebsmechanismus (600) zusammengesetzt werden.

2. Flüssigkeitszufuhranordnung gemäß irgendeinem der vorhergehenden Ansprüche, **dadurch gekennzeichnet, dass** der elastische Schlauch (200) anliegend an der Wand des ersten halbkreisförmigen Gehäuses (521) untergebracht ist.

3. Flüssigkeitszufuhranordnung gemäß irgendeinem der vorhergehenden Ansprüche, **dadurch gekennzeichnet, dass** das Übersetzungszahnrad (513) innerhalb des zweiten halbkreisförmigen Gehäuses (522) untergebracht ist.

4. Flüssigkeitszufuhranordnung gemäß irgendeinem der vorhergehenden Ansprüche, **dadurch gekennzeichnet, dass** das erste halbkreisförmige Gehäuses (521) und das zweite halbkreisförmige Gehäuse (522) durch eine SteckerBuchsen-Verbindung (602, 604) miteinander verbunden sind und außerdem den durch die Flüssigkeitszufuhranordnung (500) verlaufenden elastischen Schlauch (200) einklemmen.

5. Flüssigkeitszufuhranordnung gemäß irgendeinem der vorhergehenden Ansprüche, **dadurch gekennzeichnet, dass** das Pressmittel (525) kreisförmig und/oder viereckig und/oder dreieckig und/oder einer Kombination davon ausgebildet ist.

6. Flüssigkeitszufuhranordnung gemäß irgendeinem der vorhergehenden Ansprüche, weiter **dadurch gekennzeichnet, dass** der Ausgang des elastischen Schlauchs (200) mit einer Düse (700), wie beispielsweise einer Strahlabgabedüse und/oder Sprayabgabedüse, verbunden ist.

7. Flüssigkeitszufuhranordnung gemäß Anspruch 6, **dadurch gekennzeichnet, dass** die Anordnung (500) drei kreisförmige Pressmittel (524) umfasst, die drehbar auf drei separaten konvexen Naben (232) in einer dreieckigen peripheren Anordnung zu der Mittelachse (518) des Übersetzungszahnrads (513) getragen werden, und die Pressmittel (524) außerdem innerhalb des ersten halbkreisförmigen Gehäuses (521) und des zweiten halbkreisförmigen Gehäuses (522) untergebracht sind, um eine kontinuierliche Presskraft auf einen Abschnitt des elastischen Schlauchs (200) auszuüben.

8. Flüssigkeitsabgabesystem, welches zur Abgabe eines flüssigen Stoffes, wie beispielsweise einer Alkohollösung mit niedriger Viskosität, geeignet ist und die Flüssigkeitszufuhranordnung (500) gemäß Anspruch 1 und einen Antriebsmechanismus (600) umfasst, weiter **dadurch gekennzeichnet, dass** die Flüssigkeitszufuhranordnung (500) von dem Antriebsmechanismus (600) abgelöst werden kann.

9. Flüssigkeitsabgabesystem gemäß Anspruch 8, weiter **dadurch gekennzeichnet, dass** der Antriebsmechanismus einen Motor (512) umfasst, welcher ein Antriebszahnrad (514) umfasst und versetzt zu der Mittelachse des Übersetzungszahnrads (513) angeordnet ist, um ein Zusammenwirken des Antriebszahnrads (514) mit dem Übersetzungszahnrad (513) zu ermöglichen.

10. Flüssigkeitsabgabesystem gemäß Anspruch 8 bis 9, weiter **dadurch gekennzeichnet, dass** das System ein abdeckendes Gehäuse (20) und ein rückseitiges Gehäuse (10) umfasst, von denen mindestens eines wenigstens teilweise transparent ist, um eine Visualisierung eines Abgabereservoirs zu ermöglichen, und/oder von denen das abdeckende Gehäuse (20) außerdem einen Behälter (701) zur Aufnahme von Abfallflüssigkeit umfasst.

11. Flüssigkeitsabgabesystem gemäß irgendeinem der Ansprüche 8 bis 10, weiter **dadurch gekennzeichnet, dass** das System eine elektronische Schaltung (40) umfasst, welche eine Verarbeitungseinheit (702) zur Steuerung eines Betätigungssensors (710) zur Abgabe des flüssigen Stoffes umfasst, wobei die Verarbeitungseinheit (702) vorprogrammiert ist, um eine vorgegebene Volumenmenge des flüssigen Stoffes abzugeben, und die weitere elektronische Schaltung eine Datenschnittstelle-Schaltung (708) zur Verbindung mit einer weiteren elektronischen Schaltung umfasst.

12. Flüssigkeitsabgabesystem gemäß irgendeinem der Ansprüche 8 bis 11, wobei das Übersetzungszahnrad (513) zwischen dem mindestens einen Pressmittel (524) und dem Antriebsmechanismus (600) angeordnet ist.

## Revendications

1. Ensemble d'alimentation de liquide (500) approprié pour distribuer une substance liquide telle qu'une solution alcoolique à faible viscosité, l'ensemble d'alimentation de liquide comprenant au moins un moyen de pression (524), un premier logement semi-circulaire (521), un deuxième logement semi-circulaire (522), un engrenage de transmission denté (513) hébergé au sein dudit ensemble d'alimentation de liquide, et un tube souple présentant une entrée et une sortie, dans lequel l'engrenage de transmission denté (513) tourne autour d'un axe central (518) et comprend en outre au moins un moyeu convexe (232) agencé de manière périphérique par rapport audit axe central (518) et qui supporte en rotation le au moins un moyen de pression (524) qui est conçu pour tourner autour du moyeu convexe (232) conjointement à la rotation de l'engrenage de transmission denté (513), dans lequel
une partie du tube souple (200) est hébergée contre une paroi de l'ensemble d'alimentation de liquide (500), et le au moins un moyen de pression applique une force continue contre une partie du tube souple (200) hébergée entre le au moins un moyen de pression et la paroi de l'ensemble d'alimentation de liquide (500) afin de produire une action de pompage lorsqu'au moins un moyen de pression (524) est tourné grâce à un mécanisme d'entrainement (600), **caractérisé en ce que** le deuxième logement semi-circulaire comprend une découpe (526) permettant d'exposer une partie de l'engrenage de transmission denté (513) en vue d'un raccordement par engrènement mécanique à un engrenage d'entrainement (514) d'un moteur (512) du mécanisme d'entrainement (600), de sorte que l'ensemble d'alimentation de liquide (500) est configuré pour être maintenu et être rapidement séparé du mécanisme d'entrainement (600), et
dans lequel le deuxième logement semi-circulaire comprend en outre un moyen d'asservissement (520) à raccorder au mécanisme d'entrainement (600) afin de permettre à l'ensemble d'alimentation de liquide (500) de se verrouiller en position de manière coulissante lorsque l'ensemble d'alimentation de liquide et le mécanisme d'entrainement (600) sont assemblés ensemble.

2. Ensemble d'alimentation de liquide selon l'une quelconque des revendications précédentes, **caractérisé en ce que** le tube souple (200) est hébergé contre la paroi du premier logement semi-circulaire (521).

3. Ensemble d'alimentation de liquide selon l'une quelconque des revendications précédentes,
**caractérisé en ce que** l'engrenage de transmission denté (513) est hébergé au sein du deuxième logement semi-circulaire (522).

4. Ensemble d'alimentation de liquide selon l'une quelconque des revendications précédentes,
**caractérisé en ce que** le premier logement semi-circulaire (521) et le deuxième logement semi-circulaire (522) sont couplés ensemble au moyen d'un raccordement mâle-femelle (602, 604) et maintiennent en outre le tube souple (200) s'étendant à travers l'ensemble d'alimentation de liquide (500).

5. Ensemble d'alimentation de liquide selon l'une quelconque des revendications précédentes,
**caractérisé en ce que** le moyen de pression (524) est de forme circulaire et/ou de forme carrée et/ou de forme triangulaire et/ou est une combinaison desdites formes.

6. Ensemble d'alimentation de liquide selon l'une quelconque des revendications précédentes,
**caractérisé en outre en ce que** la sortie du tube souple (200) est raccordée à une buse (700), telle qu'une buse d'éjection et/ou une buse de vaporisation.

7. Ensemble d'alimentation de liquide selon la revendication 6, **caractérisé en ce que** l'ensemble (500) comprend trois moyens de pression (524) de forme circulaire supportés en rotation sur trois moyeux convexes (232) séparés selon un agencement périphérique triangulaire par rapport à l'axe central (518) de l'engrenage de transmission (513) et ledit moyen de pression (524) est en outre hébergé au sein du premier logement semi-circulaire (521) et du deuxième logement semi-circulaire (522) afin d'appliquer une force de pression continue contre une partie du tube souple (200).

8. Système de distribution de liquide, approprié pour distribuer une substance liquide telle qu'une solution alcoolique à faible viscosité, et qui comprend l'ensemble d'alimentation de liquide (500) selon la revendication 1 et un mécanisme d'entrainement (600), **caractérisé en outre en ce que** l'ensemble d'alimentation de liquide (500) peut être séparé du mécanisme d'entrainement (600).

9. Système de distribution de liquide selon la revendication 8, **caractérisé en outre en ce que** le mécanisme d'entrainement comprend un moteur (512) comprenant un engrenage d'entrainement denté (514) et qui est agencé de manière décalée par rapport à l'axe central de l'engrenage de transmission (513) afin de permettre une interaction de l'engrenage d'entrainement denté (514) avec l'engrenage de transmission denté (513).

10. Système de distribution de liquide selon la revendication 8 ou 9, **caractérisé en outre en ce que** le système comprend un couvercle (20) et un dos (10) dont au moins un est au moins en partie transparent afin de permettre une visualisation d'un réservoir de distribution et/ou ledit couvercle (20) comprenant en outre un réceptacle (701) destiné à contenir un déchet liquide.

11. Système de distribution de liquide selon l'une quelconque des revendications 8 à 10, **caractérisé en outre en ce que** ledit système comprend un circuit électronique (40) comprenant une unité de traitement (702) permettant de commander un capteur d'actionnement (710) afin de distribuer ladite substance liquide, ladite unité de traitement (702) est préprogrammée pour distribuer une quantité volumétrique prédéfinie de substance liquide, et ledit circuit électronique comprend en outre un circuit d'interface de données (708) à raccorder à un autre circuit électronique.

12. Système de distribution de liquide selon l'une quelconque des revendications 8 à 11, dans lequel l'engrenage de transmission denté (513) est agencé entre le au moins un moyen de pression (524) et ledit mécanisme d'entrainement (600).
